(19)

**Europäisches Patentamt**
**European Patent Office**
**Office européen des brevets**

(11) **EP 4 606 489 A1**

(12) **EUROPEAN PATENT APPLICATION**

(43) Date of publication:
27.08.2025 Bulletin 2025/35

(21) Application number: 25150081.5

(22) Date of filing: 02.01.2025

(51) International Patent Classification (IPC):
*B05C 5/02* (2006.01)

(52) Cooperative Patent Classification (CPC):
B05C 5/0254; H01M 10/05

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.02.2024 KR 20240024832

(71) Applicant: SAMSUNG SDI CO., LTD.
Yongin-si, Gyeonggi-do 17084 (KR)

(72) Inventors:
• Kim, Yong Jin
17084 Yongin-si, Gyeonggi-do (KR)
• Kim, Bo Ra
17084 Yongin-si, Gyeonggi-do (KR)
• Kim, Jake
17084 Yongin-si, Gyeonggi-do (KR)
• Ahn, Tae Sung
17084 Yongin-si, Gyeonggi-do (KR)
• Jung, Hee Chan
17084 Yongin-si, Gyeonggi-do (KR)
• Hwang, Yong Jun
17084 Yongin-si, Gyeonggi-do (KR)

(74) Representative: Gulde & Partner
Patent- und Rechtsanwaltskanzlei mbB
Berliner Freiheit 2
10785 Berlin (DE)

(54) **SECONDARY BATTERY MANUFACTURING DEVICE**

(57) The present disclosure relates to a secondary battery manufacturing device (1), and technical problems to be solved are directed to providing a secondary battery manufacturing device (1) capable of removing gas from a slurry to be applied on a base material (12). To this end, the present disclosure provides a secondary battery manufacturing device (1) including a case portion (20) provided with a nozzle (26) at a position facing a base material (12) moving through a coating roll (10), a cavity portion (30) located inside the case portion (20) and forming a conduit for transferring a coating solution to the nozzle (26), a vent portion (40) whose one side is installed in a shape surrounding an inlet of the cavity portion (30) and the other side extends to the outside of the case portion (20) to form a path for discharging gas, and a filtering portion (50) located between the cavity portion (30) and the vent portion (40) and configured to move only gas contained in the coating solution in a direction toward the vent portion (40).

FIG. 2

EP 4 606 489 A1

**Description**

**BACKGROUND**

**1. Field**

The present disclosure relates to a secondary battery manufacturing device.

**2. Description of the Related Art**

A secondary battery is a battery which can be charged and discharged, unlike a primary battery which cannot be re-charged. Low-capacity secondary batteries are used in small portable electronic devices such as smartphones, feature phones, laptop computers, digital cameras, camcorders, and the like, and large-capacity secondary batteries are widely used as power sources for driving motors, a batteries for storing power, and the like in hybrid vehicles, electric vehicles, and the like. These secondary batteries include an electrode assembly composed of a positive electrode and a negative electrode, a case which accommodates the same, and a terminal connected to the electrode assembly.

In production of secondary batteries, a process of uniformly applying a slurry including an active material and the like on a thin base material is one of the important processes for ensuring stable performance and safety in secondary batteries.

The above-described information disclosed in the background technology of the present disclosure is only for improving understanding of the background of the present disclosure, and accordingly, may include information that does not constitute the related art.

**SUMMARY**

The invention is defined by the appended claims. The description that follows is subjected to this limitation. Any disclosure lying outside the scope of said claims is only intended for illustrative as well as comparative purposes.

The present disclosure relates to a secondary battery manufacturing device capable of removing gas from a slurry to be applied on a base material.

However, the technical problems to be solved by the present disclosure are not limited to the above-described technical problem, and other technical problems which are not mentioned will be clearly understood by those skilled in the art from the following description.

A secondary battery manufacturing device according to one embodiment of the present disclosure for solving the above technical problem includes a case portion provided with a nozzle, the nozzle being configured to face a base material being moved by a coating roll, a cavity portion positioned inside the case portion, the cavity portion forming a conduit for transferring a coating solution to the nozzle, a vent portion having a first side surrounding an inlet to the cavity portion and a second side extending outward from the case portion to form a path for discharging gas, and a filtering portion positioned between the cavity portion and the vent portion, the filtering portion being configured to direct gas contained in the coating solution in a direction toward the vent portion and prevent or reduce liquid of the coating solution from being directed to the vent portion.

According to another embodiment, the case portion may include a lower case surrounding a lower portion of the cavity portion and an upper case surrounding an upper side of the filtering portion, with the upper case being fixed to the lower case. In other words, the lower case and the upper case may form a cavity when fixed to each other in which the cavity portion, the filtering portion and/or the vent portion or parts thereof may be accommodated.

According to another embodiment, an upper side of the lower case may be open. The lower case may be formed in a concave shape toward the upper side and may have a length in a width direction corresponding to a length in the width direction of the base material. The cavity portion may be located at least partially inside the lower case. The nozzle, which is a hole for discharging the coating solution, may be provided in the lower case facing the base material. The nozzle may include a groove extending from an upper end of the lower case in the width direction of the lower case.

According to another embodiment, an lower side of the upper case may be open. The upper case may have a concave shape toward a lower side, and may be fixed to the lower case while surrounding the filtering portion and the vent portion. The upper case and the lower case may be integrally formed.

According to another embodiment, the cavity portion may include an inner pipe forming a conduit for supplying the coating solution in a width direction of the case portion, with an upper side of the inner pipe being open, and a supply pipe configured to supply the coating solution to the inner pipe, the supply pipe having a first side connected to the inner pipe and a second side extending to outside of the case portion.

According to another embodiment, the filtering portion may be installed on the inner pipe provided in the cavity portion and the vent portion may installed on the filtering portion.

According to another embodiment, the vent portion may include a vent cover covering an upper side of the filtering portion, the vent being configured to collect gas from the filtering portion, and a vent pipe extending from the vent cover to outside of the case portion, the vent pipe being configured to guide discharge of the gas. The vent cover may be configured to collect gas from the filtering portion. An upper case of the case portion may surround an upper side of the vent cover.

According to another embodiment, a lower side of the vent cover may be open toward the filtering portion and the vent cover may be configured to guide gas that has passed through the filtering portion. The vent cover may have a shape that gradually narrows from the lower side to a upper side.

According to another embodiment, the vent pipe may have a pipe shape extending upward from the upper side of the vent cover and protrude to the outside of the case portion.

According to another embodiment, the filtering portion may include a filtering frame positioned between the vent portion and the cavity portion, with a plurality of holes being formed in the filtering frame in a vertical direction, and a filter member detachably installed inside the filtering frame and configured to allow the gas from the coating solution to pass therethrough and to prevent the liquid from the coating solution from passing therethrough.

According to another embodiment, the filtering frame may include a first support member formed in a plate shape and covering an upper side of the cavity portion, with a first connection hole being formed in the first support member such that the gas can pass through the first support member, a second support member positioned above the first support member, with a second connection hole being formed in the second support member at a position facing the first connection hole and such that the gas can pass through the second support member, and a connection member connecting the first support member and the second support member. The filter member may be positioned between the first support member and the second support member. In other words, the first support member and the second support member may be spaced apart from one another, forming a gap that forms a cavity. The filter element may be accommodated in the cavity. The first and second connecting holes may extend through the corresponding first and second support members.

According to another embodiment, a filter mounting groove for mounting the filter member may be provided between the first support member and the second support member.

According to another embodiment, the filter member may be positioned between the first support member and the second support member.

According to another embodiment, the first connection hole has an inner diameter that gradually narrows toward an upper side where the filter member is located.

According to another embodiment, the second connection hole has inner diameter that gradually narrows toward a lower side where the filter member is located.

In other words, the first connection hole and/or the second connection hole has a conical shape and the form of a truncated cone.

According to another embodiment, the filtering portion may be attachable to and detachable from the case portion by a sliding operation. In other words, the filtering portion is connectable to the case portion by means of a, e. g. form-fit, sliding connection, wherein a sliding direction may extend in a horizontal direction. In other words, the filtering portion may be detachably installed on the case portion in a sliding manner This provides a filtering portion for a simplified assembly process that eliminates the need for a screwing or welding process. This can reduce effort and costs, as well as errors during screwing or welding. Accordingly, it is possible to provide a battery that saves costs and installation space. Due to the sliding connection, it is possible to dispense with a joining process such as welding or screwing. Accordingly, the use of stainless steel or aluminum can be dispensed with for the filtering portion as well as for the case portion, since a coating can now be provided for the mentioned components. This is not exposed to damage due to the absence of welding, so there is permanent corrosion protection.

A secondary battery manufacturing device according to one embodiment of the present disclosure for solving the above technical problem includes a case portion provided with a nozzle, the nozzle being configured to face a base material being moved by a coating roll, a cavity portion positioned inside the case portion, the cavity portion forming a conduit for transferring a coating solution to the nozzle, a vent portion having a first side surrounding an inlet to the cavity portion, and a second side extending to outside of the case portion to form a path for discharging gas, a filtering portion positioned between the cavity portion and the vent portion, the filtering portion being configured to direct gas contained in the coating solution in a direction toward the vent portion, and a guide portion fixed to the case portion, the guide portion being configured to guide sliding movement of the filtering portion.

According to another embodiment, the guide portion may include guide bodies installed on opposite sides of the filtering portion in a width direction and extending along a direction that the filtering portion moves when being guided into the case portion, and guide grooves formed in a longitudinal direction of the guide bodies. The guide bodies may be formed in a quadrangular rod shape and may be fixed to the upper case. The guide groove may form a "T"-shaped groove.

According to another embodiment, the filtering portion may include a filtering frame positioned between the vent portion and the cavity portion, with a plurality of holes being formed in the filtering frame in a vertical direction, and the filter frame being configured such that sliding movement of the filtering frame is guidable by the guide portion, and a filter member detachably positioned inside the filtering frame, the filter member being configured to allow gas form the coating solution to pass therethrough and to prevent liquid from the coating solution from passing therethrough.

According to another embodiment, the filtering frame may include a first support member formed in a plate shape and covering an upper side of the cavity portion, with a first connection hole being formed in the first support member such that through the gas may pass therethrough, a second support member positioned above the first support member, with a second connection hole being formed in the second connection member at a position facing the first connection hole, with the filter member being positioned between the first connection hole and the second connection hole, a connection member connecting the first support member and the second support member, and a wing member extending in a lateral direction of the connection member and including a guide protrusion positioned in the guide groove. The guide protrusion may form a "T"-shaped protrusion. The horizontal movement of the filtering frame may be guided in a state in which the guide protrusion is positioned in the guide groove.

According to another embodiment, the filter member may include a membrane filter. The membrane filter may include a porous membrane.

According to another embodiment, the porous membrane may include at least one of polytetrafluoroethylene (PTFE), polyvinylidene fluoride (PVDF), polypropylene (PP), perfluoroalkoxy (PFA), and ethylene tetrafluoroethylene (ETFE).

According to another embodiment, a pore size of the porous membrane is 0.2 $\mu$m or less. The pore size may be 1.5 $\mu$m or less. The pore size may be 1.0 $\mu$m or less.

According to another embodiment, a diameter of the first connection hole may be 100 $\mu$m or more, which is larger than a pore diameter (1 $\mu$m or less) of the porous membrane of the filter member.

According to another embodiment, the first connection hole and/or the second connection hole may include a plurality of first connection holes and/or plurality of second connection holes.

According to another embodiment, diameters of the first connection holes may be 200 $\pm$ 50 $\mu$m and a distance between adjacent first connection holes 64 may be 500 $\pm$ 100 $\mu$m. Diameters of the second connection holes may be 200 $\pm$ 50 $\mu$m and a distance between adjacent second connection holes may be 500 $\pm$ 100 $\mu$m.

According to another embodiment, the secondary battery manufacturing device may further include an airtight plate supporting a lower side of the filtering portion, positioned along an outer periphery of the cavity portion, and configured to guide movement of the coating solution from the cavity portion to the nozzle. Due to installation of the airtight plate, the filtering portion may stay spaced apart from the cavity portion at a set distance and not contact the cavity portion. The airtight plate may be installed along an upper open inlet of the inner pipe provided in the cavity portion, movement of the coating solution discharged from the inner pipe in directions except for a direction toward the nozzle is blocked. Further, a flow path suitable for coating conditions may be formed by merely replacing the airtight plate.

According to another embodiment, the airtight plate may include a first airtight member having a shape surrounding a rear of the inner pipe and second airtight members connected to both sides of the first airtight member in a width direction.

According to another embodiment, the wing member may be located on the first airtight member. The second airtight members are located on both sides of the inner pipe in the width direction and guide the movement of the coating solution moving to an upper side of the inner pipe in a forward direction toward the nozzle.

According to another embodiment, the first connection hole and/or the second connection hole may have a hydrophobic coating or may be hydrophobic treated. In other words, a hydrophobic material may be coated on inner side surfaces of the first connection hole, and a hydrophobic material may also be coated on inner side surfaces of the second connection holes. Hydrophobic treatment may be performed on the first connection hole and/or the second connection hole so that only air bubbles contained in the coating solution move to the filter member through the first connection hole and/or the second connection hole, and, thus, the coating solution may not move through the first connection hole and/or the second connection hole to the filter member. The hydrophobic coating or application may be performed on an inner side surface of the first support member and/or the second support member facing the first connection hole and/or the second connection hole, respectivley.

According to another embodiment, the hydrophobic coating may include at least one of nanosilica, fluorinated nanosilica, polyurethane, non-acetic acid type silicon, and a fluorocarbon compound (fluorocarbon).

According to another embodiment, the first support member and/or the second support member may have a hydrophilic coating. The first support member and/or the second support member may be formed in a flat plate shape and hydrophilic treatment may be performed on a lower side surface of the first support member facing the cavity portion.

According to another embodiment, the secondary battery manufacturing device may include a locking portion. The locking portion may be configured to prevent separation of the filtering portion to outside of the case portion. Unintentional separation of the filtering portion mounted in case portion to outside of the case portion may be prevented by installing the locking portion. The locking portion may be located outside the case portion, and may be fixed while surrounding the lower case, with the guide portion protruding to the outer side of the case portion. The locking portion may include a locking body and locking protrusions. The locking body may have a rod shape extending in the vertical direction and the locking protrusions may extend in a direction toward the case portion from upper and lower sides of the locking body. The locking protrusion at the upper side may be positioned to an upper side of the guide portion and the locking protrusion at the lower side may be positioned to the lower case and, thus, movement of the locking protrusion is restricted.

## BRIEF DESCRIPTION OF DRAWINGS

Since the following drawings appended in the present specification exemplify preferred embodiments of the present disclosure, and serve to help further understanding of the technical of the present disclosure together with the following detailed description of the present disclosure, the present disclosure should not be understood as being limited to the items disclosed in the drawings:

FIG. 1 is a side view illustrating an exemplary secondary battery manufacturing device according to the present disclosure;

FIG. 2 is an exploded perspective view illustrating the exemplary secondary battery manufacturing device according to the present disclosure;

FIG. 3 is a perspective view illustrating the exemplary secondary battery manufacturing device according to the present disclosure;

FIG. 4 is a side cross-sectional view illustrating the exemplary secondary battery manufacturing device according to the present disclosure;

FIG. 5 is a front view illustrating a state in which an exemplary filtering frame according to the present disclosure is connected to a guide portion;

FIG. 6 is a side cross-sectional view illustrating an installation state of an exemplary locking portion according to the present disclosure;

FIG. 7 is a cross-sectional view illustrating an exemplary filtering portion according to the present disclosure;

FIG. 8 is a bottom view illustrating an exemplary first supporter according to the present disclosure; and

FIGS. 9 and 10 are graphs illustrating a liquid entry pressure (LEP) according to a pore diameter of an exemplary filter member according to the present disclosure.

## DETAILED DESCRIPTION

Hereinafter, preferred embodiments of the present disclosure will be described in detail with reference to the accompanying drawings. Prior to this, the terms and words used in the present specification and claims should not be construed as being limited to their usual or dictionary meanings and should be interpreted as meanings and concepts consistent with the proposed technical of the present disclosure based on the principle that the inventor may appropriately define the concept of terms to describe his/her invention in the best way. Accordingly, since the embodiments disclosed in the present specification and configurations shown in the drawings are only some of the most preferred embodiments of the present disclosure and do not represent the entire technical of the present disclosure, it should be understood that there are various equivalents and modifications which may replace them at the time of filing the present application.

Further, when used in the present specification, "comprise or include" and/or "comprising or including" specify the presence of mentioned shapes, numbers, steps, operations, members, and/or groups thereof and do not exclude the presence or addition of one or more other shapes, numbers, steps, operations, members, and/or groups thereof.

Further, in order to help understanding of the invention, the accompanying drawings are not drawn to actual scale and the sizes of some components may be exaggerated. In addition, the same reference numerals may be given to the same components in different embodiments.

Stating that two objects for comparison are 'the same' means that that the two objects are 'substantially the same.' Accordingly, 'substantially the same' may include a deviation considered to be a low level in the art, for example, a deviation within 5%. Further, uniformity of a parameter in a certain area may mean uniformity from an average perspective.

Although first, second, and the like are used to describe various components, these components are not limited by these terms. These terms are only used to distinguish one component from another component, and a first component may also be a second component unless otherwise stated.

Throughout the specification, unless otherwise stated, each component may be singular or plural.

Disposition of an arbitrary component at "an upper portion (or a lower portion)" of a component or "on (or under)" the component means that the arbitrary component may be disposed in contact with an upper surface (or a lower surface) of the component or another component may be interposed between the component and the arbitrary component disposed on (or under) the component.

Further, when it is described that a certain component is "connected," "coupled," or "linked" to another component, it should be understood that the components may be directly connected or linked to each other, but still another component may be "interposed" between the components, or the components may be "connected," "coupled," or "linked" through still another component. In addition, a case in which a certain part is electrically connected to another part includes not only a case in which the parts are directly connected, but also a case in which the parts are connected with another element therebetween.

Throughout the specification, "A and/or B" refers to A, B, or A and B unless otherwise stated. That is, "and/or" includes all or any combination of a plurality of listed items. "C to D" means greater than or equal to C and less than or equal to D unless otherwise specified.

The terms used in the present specification are provided for describing the embodiments of the present disclosure, and are not intended to limit the present disclosure.

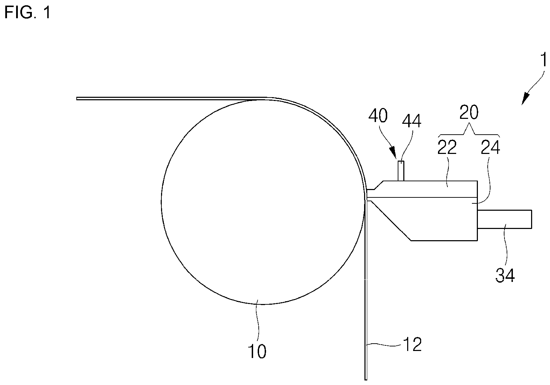

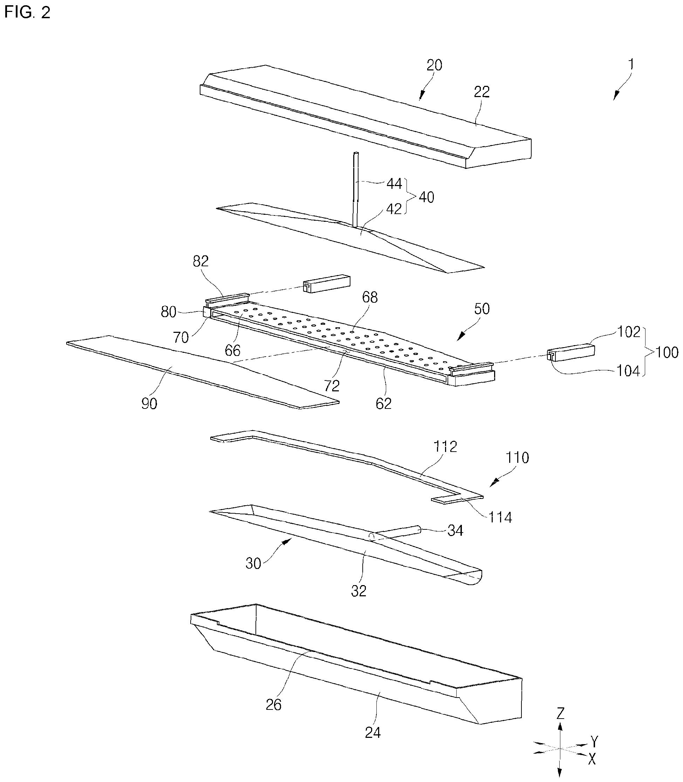

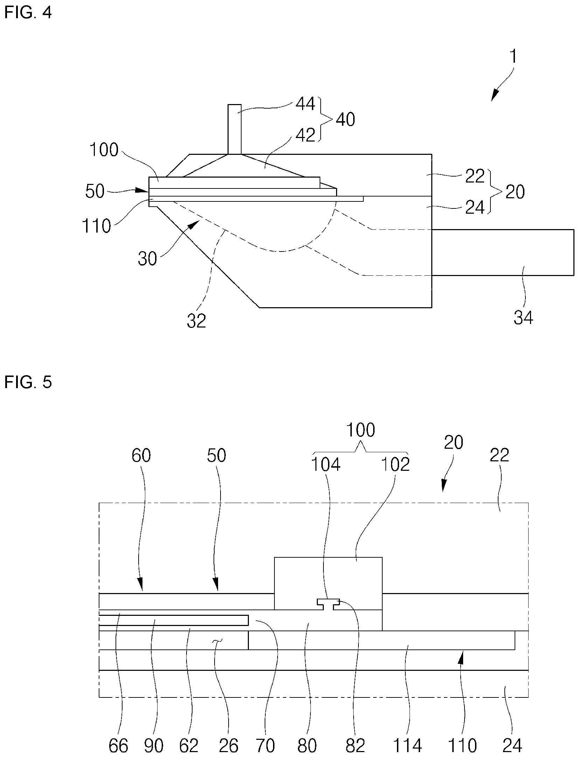

FIG. 1 is a side view illustrating an exemplary secondary battery manufacturing device 1 according to the present disclosure, FIG. 2 is an exploded perspective view illustrating the exemplary secondary battery manufacturing device 1 according to the present disclosure, and FIG. 4 is a side cross-sectional view illustrating the exemplary secondary battery manufacturing device 1 according to the present disclosure.

As shown in FIGS. 1, 2, and 4, the exemplary secondary battery manufacturing device 1 according to the present disclosure includes a case portion 20, a cavity portion 30, a vent portion 40, and a filtering portion 50. In some examples, the exemplary secondary battery manufacturing device 1 may further include a guide portion 100, an airtight plate 110, and a locking portion 120. In the present disclosure, the secondary battery manufacturing device 1 may be referred to as a slot die coater.

In the secondary battery manufacturing device 1, a filter member 90 including a porous membrane may be installed between the cavity portion 30, which supplies a liquid slurry, and the vent portion 40. The vent portion 40 may extend to the outside of the case portion 20 to suppress leakage of the slurry and allow for only air bubbles to be removed from the slurry. In the present disclosure, the air bubbles contained in the slurry may be referred to as gas.

Since only the air bubbles contained in the slurry may be exhausted to the outside of the case portion 20, slurry leakage may be suppressed and production costs may because there is less additional work required from workers. When only the vent portion 40 is installed without the filtering portion 50, there may be a problem in that the slurry is discharged along with the gas to the outside of the case portion 20. Further, when only the vent portion 40 is installed without the filtering portion 50, work efficiency may deteriorate as only air bubbles at a specific portion where the vent portion 40 is installed are removed. However, when the filtering portion 50 using a porous membrane is installed along with the vent portion 40, the air bubbles may be removed from an entire open area of the cavity portion 30.

A base material 12, which is an electrode plate for a secondary battery, is moved by a coating roll 10. The secondary battery manufacturing device 1 is installed at a position facing the coating roll 10. The secondary battery manufacturing device 1 may coat the outside of the base material 12 with an active material using a slot die coater. A coating solution, which is the liquid slurry, is discharged from the slot die coater and fixed to the outside of the base material 12. The base material 12 may be used for a negative electrode or positive electrode.

Various alternatives are possible with respect to the technical idea of the case portion 20, including the provision of a nozzle 26 at a position facing the base material 12 moving through the coating roll 10. The case portion 20 according to one embodiment of the present disclosure includes an upper case 22 and a lower case 24.

The lower case 24 is installed in a shape surrounding a lower portion of the cavity portion 30. An upper side of the lower case 24 is open. The lower case 24 is formed in a concave shape toward the upper side and may have a length in a width direction (X) corresponding to a length in the width direction (X) of the base material 12. The cavity portion 30 may be located inside the lower case 24. The nozzle 26, which is a hole for discharging the coating solution, may be provided in the lower case 24 facing the base material 12. The nozzle 26 may include a groove extending from an upper end of the lower case 24 in the width direction (X) of the lower case 24. The nozzle 26 forms a path for discharging the coating solution moving through the cavity portion 30 to the base material 12.

The upper case 22 surrounds an upper side of the filtering portion 50 and is fixed to the lower case 24. The upper case 22 may have a concave shape toward a lower side, and may be fixed to the lower case 24 while surrounding the filtering portion 50 and the vent portion 40. The upper case 22 and the lower case 24 may be integrally formed, and various alternatives are possible, such as the cases being composed of three or more components or the like as necessary.

Various alternatives are possible with respect to the technical idea of the cavity portion 30 forming a conduit located inside the case portion 20 and provided to transfer the coating solution to the nozzle 26. The cavity portion 30 according to one embodiment of the present disclosure includes an inner pipe 32 and a supply pipe 34.

The inner pipe 32 forms a conduit for supplying the coating solution in the width direction (X) of the case portion 20 and an upper side of the inner pipe 32 is open. The inner pipe 32 extends in the width direction (X) of the case portion 20 and is in fluid communication with the nozzle 26 of the case portion 20.

Because one side of the supply pipe 34 is connected to the inner pipe 32 and the other side of the supply pipe 34 extends to outside of the case portion 20, the supply pipe 34 forms a conduit for supplying the coating solution to the inner pipe 32. In the present disclosure, the coating solution may be referred to a slurry, as described throughout the disclosure.

Various alternatives are possible with respect to the technical idea of one side of the vent portion 40 being installed in a shape surrounding an inlet of the cavity portion 30 and the other side of the vent portion 40 extending to the outside of the case portion 20 to form a path that discharges gas. The vent portion 40 according to one embodiment of the present disclosure includes a vent cover 42 and a vent pipe 44.

Various alternatives are possible with respect to the technical idea of the vent cover 42 covering an upper side of the filtering portion 50 and collecting gas moving from the upper side of the filtering portion 50. A lower side of the vent cover 42 according to one embodiment of the present disclosure is open toward the filtering portion 50 and the vent cover 42 guides gas that has passed through the filtering portion 50. The vent cover 42 may have a shape that gradually narrows from the lower side to the upper side.

The vent pipe 44 is connected to the upper side of the vent cover 42 to serve as a gas discharge path. Various alternatives are possible with respect to the technical idea of the vent pipe 44 extending from the vent cover 42 to the outside of the case portion 20 to guide discharge of gas. The vent pipe 44 according to one embodiment of the present disclosure may have a pipe shape extending upward from the upper side of the vent cover 42 and protrude to the outside of the case portion 20. The gas discharged to the upper side of the filtering portion 50 is guided by the vent cover 42 to the vent pipe 44 and is exhausted to the outside of the case portion 20 through the vent pipe 44.

Various alternatives are possible with respect to the technical idea of the filtering portion 50 being located between the cavity portion 30 and the vent portion 40 and allowing only the gas contained in the coating solution to move in a direction toward the vent portion 40. The filtering portion 50 may be attached to and detached from the case portion 20 by a sliding operation. A space for mounting the filtering portion 50 is provided inside the case portion 20, and a filter of the filtering portion 50 operated in a sliding manner may be easily replaced.

The filtering portion 50 is installed on the inner pipe 32 provided in the cavity portion 30 and the vent portion 40 is installed on the filtering portion 50. Accordingly, the gas contained in the coating solution moving to the nozzle 26 through the inner pipe 32 passes through the filtering portion 50 and then is discharged to the outside of the case portion 20 through the vent portion 40. Further, the liquid coating solution may not pass through the filtering portion 50, and, thus, the liquid coating solution is discharged only through the nozzle 26.

The filtering portion 50 according to one embodiment of the present disclosure may include a filtering frame 60 and the filter member 90. Since the filtering portion 50 is detachably installed on the case portion 20 in a sliding manner, a process of replacing the filtering frame 60 and the filter member 90 may be performed without disassembling the case portion 20. The filter member 90 may include a porous membrane.

Various alternatives are possible with respect to the technical idea of the filtering frame 60 being located between the vent portion 40 and the cavity portion 30, being formed with a plurality of holes in the vertical direction (Z), and supporting the filter member 90. The sliding movement of the filtering frame 60 is guided by the guide portion 100. In the present disclosure, the filter member 90 may include or be referred to as a porous membrane or membrane.

The filtering frame 60, which supports the filter member 90, may include a plurality of connection holes to facilitate the collection of air bubbles. Since the filtering frame 60 forms a groove having a shape concave toward the filter member 90, the air bubbles contained in the coating solution gather in the concave-shaped groove provided in the filtering frame 60, and, thus, the air bubbles may be relatively easily and rapidly collected.

Because pores of the filter member 90 may be blocked by slurry particles as the working time increases, the filter member 90 including a porous membrane may be periodically replaced.

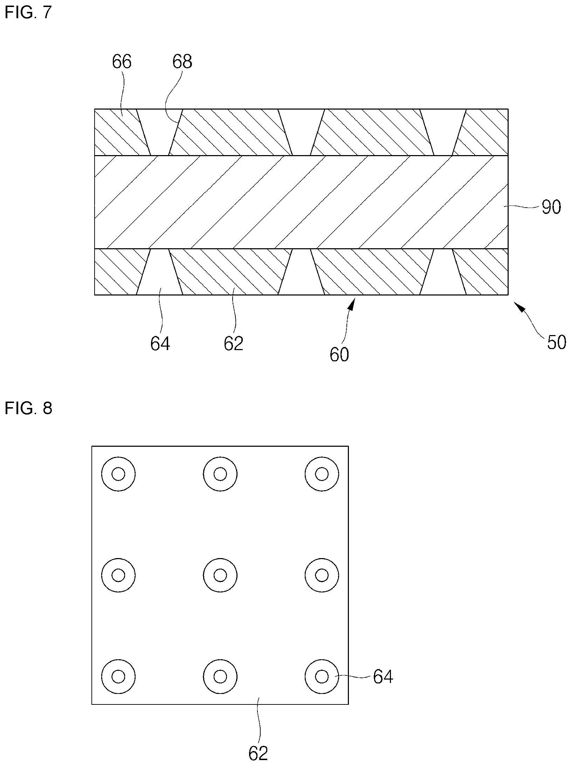

FIG. 7 is a cross-sectional view illustrating the exemplary filtering portion 50 according to the present disclosure and FIG. 8 is a bottom view illustrating an exemplary first support member 62 according to the present disclosure. As shown in FIGS. 2, 7, and 8, the filtering frame 60 according to one embodiment of the present disclosure may include the first support member 62, a second support member 66, and a connection member 70. In some examples, the filtering frame 60 may further include a wing member 80.

Various alternatives are possible with respect to the technical idea of the first support member 62 being formed in a plate shape that covers an upper side of the cavity portion 30 and including a first connection hole 64 through which gas passes. The first connection hole 64 may have an inner diameter that gradually narrows toward an upper side where the filter member 90 is located. A diameter of the first connection hole 64 may be 100 $\mu$m or more, which is larger than a pore diameter (1 $\mu$m or less) of the porous membrane of the filter member 90.

The first support member 62 may be formed in a plate shape and the filter member 90 is mounted on the first support member 62. The first support member 62 may be installed to contact the coating solution inside the cavity portion 30. Hydrophobic treatment may be performed on the first connection hole 64 so that only the air bubbles contained in the coating solution move to the filter member 90 through the first connection hole 64, and, thus, the coating solution may not move through the first connection hole 64 to the filter member 90. The hydrophobic coating or application may be performed on an inner side surface of the first support member 62 facing the first connection hole 64. A plurality of first connection holes 64 are provided in the first support 62 and extend in a vertical direction. A path of the first connection hole 64 gradually narrows from a lower side to an upper side. Accordingly, only air bubbles of the coating solution located under the first connection holes 64 may be collected through the first connection holes 64 and move to the filter member 90 at an upper side. Thus, the liquid coating solution may not move upward through the first connection holes 64 on which hydrophobic treatment has been performed.

The first support member 62 may be formed in a flat plate shape and hydrophilic treatment may be performed on a lower side surface of the first support member 62 facing the cavity portion 30. Because the hydrophilic coating or application is performed on the lower side surface of the first support member 62, the liquid coating solution is present on the lower side surface of the first support member 62 and only air bubbles may move to the first connection holes 64, which have a concave groove shape.

When a hydrophobic surface and a hydrophilic surface are adjacent to each other, the air bubbles are more attracted to the hydrophobic surface side, and, thus, the air bubbles may be induced to the hydrophobic surface. Since surface free energy is less in the concave portion where the first connection holes 64 are formed in the lower side surface of the first support member 62, the air bubbles may be collected more easily than on a flat surface.

As the air bubbles induced to the hydrophobic surface of the first connection holes 64 pass through small pores of the hydrophobically treated filter member 90, only air bubbles may be discharged to the upper side of the filter member 90 without leakage of the coating solution. In an operation of discharging only gas to the upper side of the filtering frame 60, a capillary phenomenon is used and only gas may be removed from the system without leakage of the liquid within a certain pressure range.

When a membrane is used as the filter member 90, a liquid entry pressure (LEP) at which the liquid starts to leak through pores of the membrane may be given by the following Young-Laplace equation:

$$LEP = P_1 - P_0 = -\frac{4\gamma \cos(\alpha)}{d}$$

wherein $P_1$ is a pressure inside a system and a pressure at a lower side of the filter member 90, $P_0$ is a pressure outside the system and a pressure at an upper side of the filter member 90, $\gamma$ is the surface tension of the liquid coating solution, $\alpha$ is a contact angle between the liquid coating solution and the filter member 90, and d is a diameter of the pore provided in the filter member 90. When a pressure difference between the inside and outside increases, $\alpha$ also increases, and when $\alpha$ exceeds a certain value, the liquid leaks through the pores to outside of the system. The contact angle $\alpha$ is sensitively affected by the surface treatment state.

In order to suppress the leakage of the coating solution through the filter member 90, it is preferable that an LEP value is as high as possible, the contact angle is large, and a pore size of the membrane is small. When a porous membrane is used as the filter member 90, more effective air bubble removal may be performed.

Various alternatives are possible with respect to the technical idea of the second support member 66 being located on the first support 62 and including a second connection hole 68 at a position facing the first connection hole 64 with the filter member 90 therebetween. A plurality of second connection holes 68 may be provided to extend in the vertical direction. The second connection holes 68 have inner diameters that gradually narrow toward a lower side where the filter member 90 is located. The second support member 66 has a plate shape and is spaced apart from the first support member 62. A filter mounting groove 72 for mounting the filter member 90 is provided between the first support member 62 and the second support member 66.

Because the first connection holes 64 and the second connection holes 68 are installed at positions facing each other with the filter member 90 therebetween, gas may be more smoothly exhausted. Hydrophobic surface treatment may also be performed on inner side surfaces of the second support member 66 facing the second connection holes 68. Diameters of the first connection holes 64 may be 200 ± 50 μm and a distance between adjacent first connection holes 64 may be 500 ± 100 μm. Diameters of the second connection holes 68 may be 200 ± 50 μm and a distance between adjacent second connection holes 68 may be 500 ± 100 μm.

A hydrophobic material is coated on inner side surfaces of the first connection holes 64, and a hydrophobic material may also be coated on inner side surfaces of the second connection holes 68. When the coating solution is a negative electrode slurry, the coating solution includes distilled water or water and, thus, has hydrophilic characteristics. Accordingly, the coating solution is induced to the lower side surface of the first support member 62 on which a hydrophilic coating is formed and is prevented from moving to the first connection hole 64 on which a hydrophobic coating is formed. However, the air bubbles contained in the coating solution are not affected by the hydrophobic coating and are collected in the first connection hole 64 forming a concave groove shape, and the air bubbles move to the vent portion 40 through the filter member 90 and the second connection holes 68.

The hydrophobic material contained in the hydrophobic coating should include stable characteristics such that the coating will not participate in an electrochemical reaction in the secondary battery. The hydrophobic coating used in the present disclosure may include at least one of nanosilica, fluorinated nanosilica, polyurethane, non-acetic acid type silicon, and a fluorocarbon compound (fluorocarbon).

The fluorocarbon compound is a compound composed of carbon and fluorine atoms and has unique chemical and physical properties. A fluorocarbon molecule has a structure in which one or more carbon atoms are replaced with one or more fluorine atoms.

Various alternatives are possible with respect to the technical idea of the connection member 70 connecting the first support member 62 and the second support member 66. The connection member 70 according to one embodiment of the present disclosure is installed on both sides of the first support member 62 and the second support member 66 in the width direction (X) and extends in the vertical direction (Z) to connect the first support member 62 and the second support member 66. A length of the connection member 70 in the vertical direction (Z) may correspond to a thickness of the filter member 90 in the vertical direction (Z).

The filtering portion 50 may be detachably installed in the case portion 20. The filtering portion 50 may be mounted in the case portion 20 by sliding movement in the horizontal direction. In addition, the filtering portion 50 may be attached to or detached from the case portion 20 in various ways.

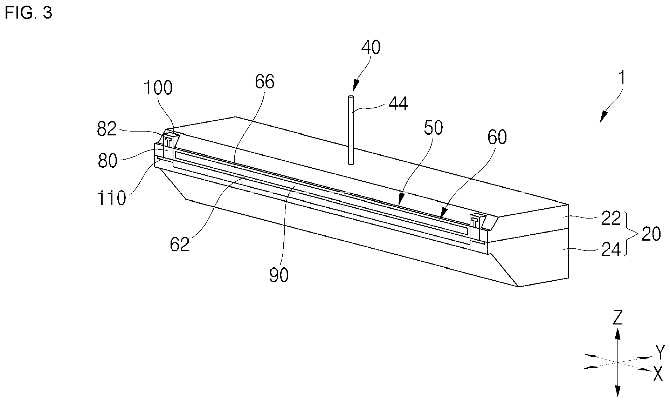

FIG. 3 is a perspective view illustrating the exemplary secondary battery manufacturing device 1 according to the present disclosure and FIG. 5 is a front view illustrating a state in which the exemplary filtering frame 60 according to the present disclosure is connected to the guide portion 100. As shown in FIGS. 3 and 5, since the wing member 80 provided with the filtering portion 50 moves along the guide portion 100 mounted in the case portion 20, the filtering portion 50 may be attached to and detached from the case portion.

Various alternatives are possible with respect to the technical idea of the wing member 80 extending in a lateral direction of the connection member 70 and including a guide protrusion 82 associated with a guide groove 104. The wing member 80 is installed on both sides of the filtering frame 60 in the width direction (X). The wing member 80 may be integrally formed with the connection member 70 or may be manufactured separately and coupled to the connection member 70. The guide protrusion 82 protruding upward from the wing member 80 is inserted and associated with the guide groove 104 of the guide portion 100 fixed to the case portion 20, and, thus, guides the sliding movement of the filtering frame 60.

Various alternatives are possible with respect to the technical idea of the guide portion 100 being fixed to the case portion 20 and guiding the sliding movement of the filtering portion 50. The guide portion 100 according to one embodiment of the present disclosure may include a guide body 102 and a guide groove 104.

Various alternatives are possible with respect to the technical idea of the guide body 102 being installed on both sides of the filtering portion 50 in the width direction (X) and extending along the moving direction of the filtering portion 50. The guide body 102 is formed in a quadrangular rod shape and may be fixed to the upper case 22.

Various alternatives are possible with respect to the technical idea of the guide groove 104 forming a groove in the longitudinal direction (Y) of the guide body 102. The guide groove 104 according to one embodiment of the present disclosure may form a "T"-shaped groove and the guide protrusion 82 may form a "T"-shaped protrusion. The horizontal movement of the filtering frame 60 may be guided in a state in which the guide protrusion 82 is positioned in the guide groove 104.

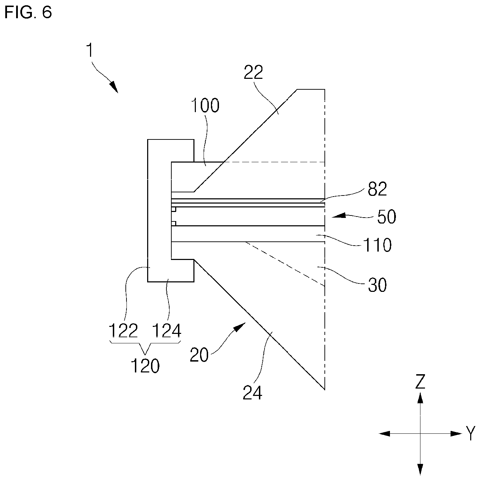

FIG. 6 is a side cross-sectional view illustrating a state of the exemplary locking portion 120 according to the present disclosure. Various alternatives are possible with respect to the technical idea of the locking portion 120 providing a locking structure to prevent separation of the filtering portion 50 to outside of the case portion 20. Unintentional separation of the filtering portion 50 mounted in case portion 20 to outside of the case portion 20 may be prevented by installing the locking portion 120. The locking portion 120 according to one embodiment of the present disclosure is located outside the case portion 20, and is fixed while surrounding the lower case 24, with the guide portion 100 protruding to the outer side of the case portion 20. The locking portion 120 according to one embodiment of the present disclosure includes a locking body 122 and locking protrusions 124. The locking body 122 has a rod shape extending in the vertical direction (Z) and the locking protrusions 124 extend in a direction toward the case portion 20 from upper and lower sides of the locking body 122. The locking protrusion 124 at the upper side are positioned to an upper side of the guide portion 100 and the locking protrusion 124 at the lower side are positioned to the lower case 24 and, thus, movement of the locking protrusion is restricted. The filtering portion 50 and the airtight plate 110 (to be described below) are located in a lateral direction of the locking body 122. Since the locking portion 120 is fixed to the guide portion 100 and the lower case 24 in a forcibly fitting manner, the filtering portion 50 is restricted by the locking body 122 and, thus, lateral movement of the locking protrusion 124 is restricted.

As shown in FIG. 2, the airtight plate 110 supports the lower side of the filtering portion 50 and is installed along an outer periphery of the cavity portion 30. Various alternatives are possible with respect to the technical idea of the airtight plate 110 guiding the movement of the coating solution from the cavity portion 30 to the nozzle 26. The filtering portion 50 and the guide portion 100 may be located on the airtight plate 110 so that a flow of the coating solution moving from the cavity portion 30 to the nozzle 26 is not affected. Due to installation of the airtight plate 110, the filtering portion 50 may stay spaced apart from the cavity portion 30 at a set distance and not contact the cavity portion 30. Since the airtight plate 110 is installed along an upper open inlet of the inner pipe 32 provided in the cavity portion 30, movement of the coating solution discharged from the inner pipe 32 in directions except for a direction toward the nozzle 26 is blocked. Further, a flow path suitable for coating conditions may be formed by merely replacing the airtight plate 110.

The airtight plate 110 according to one embodiment of the present disclosure may include a first airtight member 112 having a shape surrounding a rear of the inner pipe 32 and second airtight members 114 connected to both sides of the first airtight member 112 in a width direction. The wing member 80 may be located on the first airtight member 112. The second airtight members 114 are located on both sides of the inner pipe 32 in the width direction and guide the movement of the coating solution moving to an upper side of the inner pipe 32 in a forward direction toward the nozzle 26.

Various alternatives are possible with respect to the technical idea of the filter member 90 being detachably installed inside the filtering frame and allowing only gas from the coating solution to pass therethrough. The filter member 90 may be installed between the first support member 62 and the second support member 66. In some examples, the filter member 90 may include a membrane filter.

A porous membrane, which is the filter member 90, may include at least one of polytetrafluoroethylene (PTFE), polyvinylidene fluoride (PVDF), polypropylene (PP), perfluoroalkoxy (PFA), and ethylene tetrafluoroethylene (ETFE).

Since a porous membrane is used as the filter member 90, as the liquid coating solution may not pass through the filter member 90, and as only gas passes through the filter member 90, gas may be removed from the coating solution. Pressure in the secondary battery manufacturing device 1 may intermittently rise due to operation of a pump which supplies the slurry (the coating solution), and even in such a case, leakage of the liquid coating solution through the filter member 90 may be prevented. To this end, it is preferable that the LEP value, which may be calculated using the above-described Young-Laplace equation, is high. In order to acquire a high LEP value, a contact angle of the membrane should be large and a pore diameter of the membrane should be small.

Because a minimum pressure for discharging the slurry through the nozzle 26 does not exceed 10 bar under general coating conditions, when the LEP is greater than 10 bar, the leakage of the slurry may not occur and air bubbles may be stably removed. Among a plurality of possible membranes, PVDF has the largest contact angle and its LEP value is also high; when a pore size of the membrane manufactured of PVDF is 0.2 $\mu$m or less, the LEP is 10 or more, which is satisfactory for the purposes of the present disclosure.

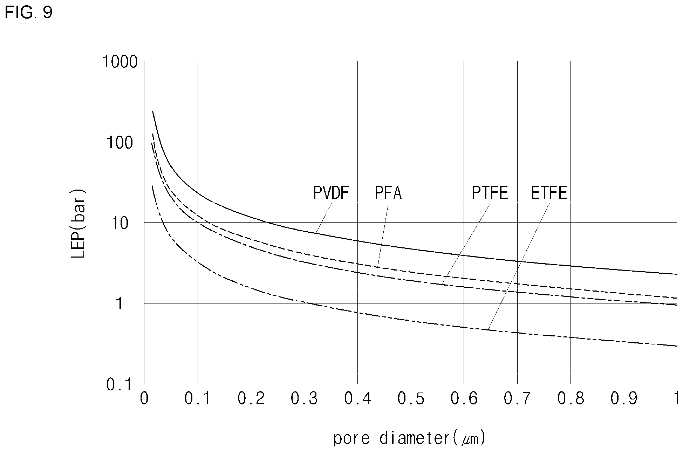

FIG. 9 is a graph illustrating the liquid entry pressure (LEP) according to the pore diameter of the exemplary filter member 90 according to the present disclosure. In particular, FIG. 9 is a graph of the results of calculating the LEP value according to pore sizes of membranes made of hydrophobic materials such as PVDF, PFA, PTFE, and ETFE
in the graph shown in FIG. 9, the contact angle of PTFE is 110°, the contact angle of PFA is 115°, the contact angle of ETFE is 96°, and the contact angle of PVDF is 140°.

Given that the surface tension of water, which was applied as a solvent for a negative electrode slurry, is 0.072 N/m, it can be seen in FIG. 9 that PVDF having a large contact angle may withstand the highest pressure range, and the LEP value significantly increases as the pore diameter decreases.

Meanwhile, as the surface tension $\gamma$ decreases, the LEP also decreases in proportion to the surface tension $\gamma$. The surface tension of N-methyl-2-pyrrolidone (NMP), which is generally applied as a solvent for a positive electrode slurry, is roughly 0.040 N/m lower than that of water. And the negative electrode slurry may also have a lower value than the surface tension of the water, which is a solvent, depending on a composition thereof. Accordingly, a range of physical properties or the like in which the present disclosure may be effective may be acquired by calculating the LEP value at a low surface tension value.

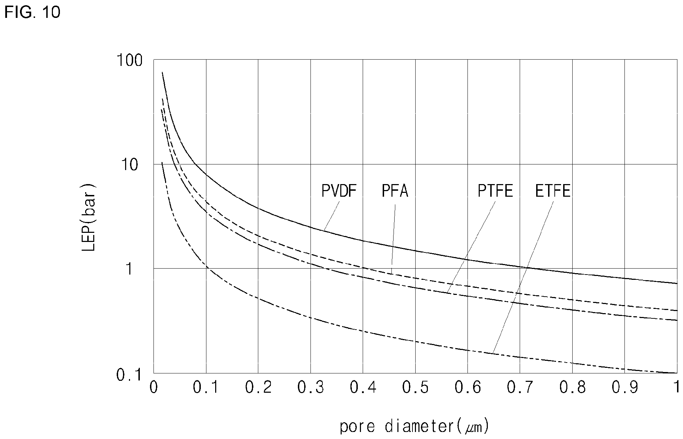

FIG. 10 is a graph illustrating the liquid entry pressure (LEP) according to the pore diameter of the exemplary filter member 90 according to the present disclosure. FIG. 10 shows an LEP calculation result at 0.024 N/m, which is 1/3 the surface tension value of the water, as a graph. The result values in FIG. 10 include a range of physical properties of a general slurry, as it is assumed that the surface tension of the slurry is very low. A pressure applied inside the cavity portion 30 is several tens of kPa and it may be assumed that the leakage of the slurry does not occur when the LEP is 1 bar or more. However, since pulsation or the like may occur when an actual pump is driven, setting an LEP of 3 bar or more as a safety margin is more stable and the hydrophobic physical properties and the pore diameter of the membrane, which is the filter member 90, may be limited based on these values.

In the filter member 90 according to one embodiment of the present disclosure, the membrane be formed of PVDF, which is a material having a contact angle of 140° or more, which is a value representing hydrophobic physical properties. It is preferable that the pore diameter is small, and for a material having a large contact angle, such as PVDF, even when a membrane having a pore diameter of 0.2 $\mu$m is applied, gas air bubbles may be removed from the coating solution while suppressing the leakage of the slurry.

According to the present disclosure, because air bubbles introduced into a slurry are separated from the slurry, a defect rate of secondary batteries can be decreased.

Further, according to the present disclosure, because only the air bubbles introduced into the slurry are exhausted to external air and discharging of the slurry is prevented, additional work for collecting the slurry is omitted, and thus production costs can be reduced.

However, effects which can be acquired through the present disclosure are not limited to the above-described effects, and other technical effects which are not mentioned will be clearly understood by those skilled in the art from the following description.

Although the present disclosure was described above with limited examples and drawings, the present disclosure is not limited thereto, and various modifications and variations may be made by those skilled in the art within the technical of the present disclosure and the equivalent scope of the claims to be described below.

## Claims

1. A secondary battery manufacturing device (1) comprising:

   a case portion (20) provided with a nozzle (26), the nozzle (26) being configured to face a base material (12) being moved by a coating roll (10);
   a cavity portion (30) positioned inside the case portion (20), the cavity portion (30) forming a conduit for transferring a coating solution to the nozzle (26);
   a vent portion (40) having a first side surrounding an inlet to the cavity portion (30) and a second side extending outward from the case portion (20) to form a pathway for discharging gas; and
   a filtering portion (50) positioned between the cavity portion (30) and the vent portion (40), the filtering portion (50) being configured to direct gas contained in the coating solution toward the vent portion (40) and to suppress liquid of the coating solution from being directed to the vent portion (40).

2. The secondary battery manufacturing device (1) of claim 1, wherein the case portion (20) includes a lower case (24) surrounding a lower portion of the cavity portion (30) and an upper case (22) surrounding an upper side of the filtering portion (50), with the upper case (22) being fixed to the lower case (24).

3. The secondary battery manufacturing device (1) of claim 1 or 2, wherein the cavity portion (30) includes:

   an inner pipe (32) forming a conduit for supplying the coating solution in a width direction of the case portion (20), with an upper side of the inner pipe (32) being open; and
   a supply pipe (34) configured to supply the coating solution to the inner pipe (32), the supply pipe (34) having a first side connected to the inner pipe (32) and a second side extending to outside of the case portion (20).

4. The secondary battery manufacturing device (1) of any one of claims 1 to 3, wherein the vent portion (40) includes:

   a vent cover (42) covering an upper side of the filtering portion (50), the vent cover (42) being configured to collect gas from the filtering portion (50); and
   a vent pipe (44) extending from the vent cover (42) to outside of the case portion (20), the vent pipe (44) being configured to guide discharge of the gas.

5. The secondary battery manufacturing device (1) of any one of claims 1 to 4, wherein the filtering portion (50) includes:

   a filtering frame (60) positioned between the vent portion (40) and the cavity portion (30), with a plurality of holes being formed in the filtering frame (60) in a vertical direction; and
   a filter member (90) detachably installed inside the filtering frame (60) and configured to allow the gas from the coating solution to pass therethrough and to suppress the liquid of the coating solution from passing therethrough.

6. The secondary battery manufacturing device (1) of claim 5, wherein the filtering frame (60) includes:

   a first support member (62) formed in a plate shape and covering an upper side of the cavity portion (30), with a first connection hole (64) being formed in the first support member (62) such that the gas can pass through the first support member (62);
   a second support member (66) positioned above the first support member (62), with a second connection hole (68) being formed in the second support member (66) at a position facing the first connection hole (64) and such that the gas can pass through the second support member (66);
   a connection member (70) connecting the first support member (62) and the second support member (66); and
   the filter member (90) positioned between the first support member (62) and the second support member (66).

7. The secondary battery manufacturing device (1) of claim 6, wherein the first connection hole (64) has an inner diameter that gradually narrows toward an upper side where the filter member (90) is located, and/or wherein the second connection hole (68) has an inner diameter that gradually narrows toward a lower side where the filter member (90) is located.

8. The secondary battery manufacturing device (1) of any one of claims 1 to 7, wherein the filtering portion (50) is configured to be attachable to and detachable from the case portion (20) by a sliding operation.

9. The secondary battery manufacturing device (1) of any one of claims 1 to 8 further comprising:
   a guide portion (100) fixed to the case portion (20), the guide portion (100) being configured to guide sliding movement of the filtering portion (50).

10. The secondary battery manufacturing device (1) of claim 9, wherein the guide portion (100) includes:

guide bodies (102) installed on opposite sides of the filtering portion (50) in a width direction and extending along a direction that the filtering portion (50) moves when being guided into the case portion (20); and
guide grooves (104) formed in a longitudinal direction of the guide bodies (102).

11. The secondary battery manufacturing device (1) of claim 9 or 10, wherein the filtering portion (50) includes:

a filtering frame (60) positioned between the vent portion (40) and the cavity portion (30), with a plurality of holes being formed in the filtering frame (60) in a vertical direction, and the filtering frame (60) being configured such that sliding movement of the filtering frame (60) is guidable by the guide portion (100); and
a filter member (90) detachably positioned inside the filtering frame (60), the filter member (90) being configured to allow gas from the coating solution to pass therethrough and to suppress liquid from the coating solution from pass therethrough.

12. The secondary battery manufacturing device (1) of claim 11, wherein the filtering frame (60) includes:

a first support member (62) formed in a plate shape and covering an upper side of the cavity portion (30), with a first connection hole (64) being formed in the first support member (62) such that the gas may pass therethrough;
a second support member (66) positioned above the first support member (62), with a second connection hole (68) being formed in the second support member (66) at a position facing the first connection hole (64), with the filter member (90) being positioned between the first connection hole (64) and the second connection hole (68);
a connection member (70) connecting the first support member (62) and the second support member (66); and
a wing member (80) extending in a lateral direction of the connection member (70) and including a guide protrusion (82) positioned in the guide groove (104).

13. The secondary battery manufacturing device (1) of any one of claims 5 to 7, 11 or 12, wherein the filter member (90) includes a membrane filter.

14. The secondary battery manufacturing device (1) of claim 13, wherein the membrane filter includes a porous membrane.

15. The secondary battery manufacturing device (1) of any one of claims 1 to 14, further comprising an airtight plate (110) supporting a lower side of the filtering portion (50), positioned along an outer periphery of the cavity portion (30), and configured to guide movement of the coating solution from the cavity portion (30) to the nozzle (26).

FIG. 1

FIG. 2

FIG. 3

FIG. 4

FIG. 5

FIG. 6

FIG. 7

FIG. 8

FIG. 9

FIG. 10

Europäisches
Patentamt

European
Patent Office

Office européen
des brevets

**EUROPEAN SEARCH REPORT**

Application Number

EP 25 15 0081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2016 033884 A (TORAY ENG CO LTD) 10 March 2016 (2016-03-10) * paragraphs [0001], [0021], [0022], [0031], [0052]; figures 1,2 * | 1-15 | INV. B05C5/02 |
| A | JP 2006 212592 A (TOPPAN PRINTING CO LTD) 17 August 2006 (2006-08-17) * paragraphs [0002], [0035] - [0041]; figures 9-11 * | 1-15 | |

**TECHNICAL FIELDS SEARCHED (IPC)**

B05C

The present search report has been drawn up for all claims

| Place of search | Date of completion of the search | Examiner |
|---|---|---|
| The Hague | 17 June 2025 | Blazquez Lainez, R |

## ANNEX TO THE EUROPEAN SEARCH REPORT
## ON EUROPEAN PATENT APPLICATION NO.

EP 25 15 0081

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| JP 2016033884 A | 10-03-2016 | JP 6397683 B2 | 26-09-2018 |
| | | JP 2016033884 A | 10-03-2016 |
| JP 2006212592 A | 17-08-2006 | JP 4835003 B2 | 14-12-2011 |
| | | JP 2006212592 A | 17-08-2006 |

EPO FORM P0459

For more details about this annex : see Official Journal of the European Patent Office, No. 12/82